# EUROPEAN PATENT APPLICATION

(11) **EP 4 575 956 A1**
(43) Date of publication of application: **25.06.2025**
(21) Application number: 24220980.7
(22) Date of filing: 18.12.2024
(51) Int. Cl.: G06Q 10/20, G06Q 30/0601, G07C 5/00

(54) **LEVERAGING GENERATIVE ARTIFICIAL INTELLIGENCE TO IDENTIFY PRODUCTS CORRESPONDING TO PREDICTIVE MAINTENANCE OF A VEHICLE**

(30) Priority: 19.12.2023 US 202318545706
(71) Applicant: eBay Inc., San Jose, CA 95125 (US)
(72) Inventor: HAWKINS, Samantha Diane, San Jose, 95125 (US); SPRAGUE, Corey Alan, San Jose, 95125 (US); SIPE III, Richard Vance, San Jose, 95125 (US); MARTIN, Jake, San Jose, 95125 (US); BURNETT, Adam Robert, San Jose, 95125 (US); BRADSHAW, Nickalas N., San Jose, 95125 (US)
(74) Representative: Müller-Boré & Partner Patentanwälte PartG mbB

(57) **Abstract**

Generative artificial intelligence (Al) is leveraged to generate a maintenance schedule for a vehicle and identify a list of recommended products to perform tasks described by the maintenance schedule. Initially, information corresponding to a vehicle of a user is received. Based on the information, a generative AI model is utilized to generate a maintenance schedule corresponding to the vehicle. The user is provided the maintenance schedule and a list of recommended products to perform tasks described by the maintenance schedule. In some aspects, the generative AI model generates the list of recommended products. Additionally, the user may be enabled to purchase items from the list of recommended products via an electronic marketplace.

## Description

### BACKGROUND

Many search systems allow users to search for and purchase maintenance parts for vehicles, such as air filters, brake pads, fluids, tools to perform various tasks, and the like. Each part may be designed to fit a specific vehicle of a particular year, make, model, engine type, etc. Moreover, each specific vehicle of a particular year, make, model, engine type, etc. may have its own maintenance schedule that can be dependent on a number of factors, including miles driven, type of miles driven, climate, geography, type of miles driven, or others that are unknown to the search systems. The search systems are also unaware of the skill set and ability of each user to make recommendations for purchasing maintenance parts. Accordingly, the search systems return a list of items related to the search queries that are generalized and may not be applicable to a specific user.

### SUMMARY

At a high level, aspects described herein relate to search engines. More particularly, aspects described herein relate to a search engine that leverages generative artificial intelligence (AI) to identify products corresponding to predictive maintenance of a vehicle. In accordance with aspects of the technology described herein, information corresponding to a vehicle of a user is received. Based on the information, a generative AI model is utilized to generate a maintenance schedule corresponding to the vehicle. The user is provided the maintenance schedule and a list of recommended products to perform tasks described by the maintenance schedule. In some aspects, the generative AI model generates the list of recommended products. Additionally, the user may be enabled to purchase items from the list of recommended products via an electronic marketplace.

The Summary is intended to introduce a selection of concepts in a simplified form that is further described in the Detailed Description of this disclosure. The Summary is not intended to identify key or essential features of the claimed subject matter, nor is it intended to be used as an aid in determining the scope of the claimed subject matter. Additional objects, advantages, and novel features of the technology will be provided, and in part will become apparent to those skilled in the art upon examination of the disclosure or learned through practice of the technology.

### BRIEF DESCRIPTION OF THE DRAWINGS

The patent or application file contains at least one drawing executed in color. Copies of this patent or patent application publication with color drawing(s) will be provided by the Office upon request and payment of the necessary fee. The present technology is described in detail below with reference to the attached drawing figures, wherein:
FIG. 1 is a block diagram of an example operating environment suitable for implementing aspects of the technology;
FIG. 2 is an example user interface showing an example search engine, according to an aspect of the technology described herein;
FIG. 3 is an example user interface showing an example maintenance schedule, according to an aspect of the technology described herein;
FIG. 4 is an example user interface showing an example of instructions for performing a task, according to an aspect of the technology described herein;
FIG. 5 is a flow diagram showing a method for leveraging generative AI to identify a list of recommended products corresponding to perform tasks described by a maintenance schedule, in accordance with an aspect of the technology described herein; and
FIG. 6 is an example computing device suitable for implementing the described technology, in accordance with an aspect described herein.

### DETAILED DESCRIPTION

The subject matter of aspects of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

In addition, words such as "a" and "an," unless otherwise indicated to the contrary, may also include the plural as well as the singular. Thus, for example, the constraint of "a feature" is satisfied where one or more features are present. Furthermore, the term "or" includes the conjunctive, the disjunctive, and both (*a* or *b* thus includes either *a* or *b*, as well as *a* and *b*).

While search engines are an incredibly useful tool for providing search results for received search queries, shortcomings in existing search technologies often result in the consumption of an unnecessary quantity of computing resources (e.g., I/O costs, network packet generation costs, throughput, memory consumption, etc.). When performing searches, users are often seeking particular search results. For instance, in the context of a search for a maintenance part for a vehicle, a user may be seeking a particular item for a particular maintenance task for the vehicle. However, the user may not be aware what maintenance tasks are necessary for a particular vehicle. Even if the user is aware of a particular task that needs to be performed, the user may not know what items are needed to perform the task or where to purchase the items. In this context, existing search technologies are unable to provide search results that are helpful, which then requires the user to submit additional search queries or multiple filters to obtain the desired search results pertaining to the maintenance schedule for the vehicle as well as a list of recommended products to perform tasks described by the maintenance schedule.

This requires the user to perform multiple searches to figure out the tasks actually needed to be performed, as well as multiple searches to find products available for purchase to perform those tasks. This process unnecessarily consumes various computing resources of the search system, such as processing power, network bandwidth, throughput, memory consumption, etc. In some instances, the multiple attempts to identify products needed to perform the tasks may even completely fail to satisfy the user's goal, thus requiring the user to spend even more time and computing resources on the search process by repeating the process of issuing additional queries until the user finally accesses the desired content items. In some cases, the user may even give up searching because the search engine was not able to return desired search results after multiple searches.

These shortcomings of existing search technologies adversely affect computer network communications. For example, each time a query is received, contents or payload of the search queries is typically supplemented with header information or other metadata, which is multiplied by all the additional queries needed to obtain the particular items the user desires to complete a task. As such, there are throughput and latency costs by repetitively generating this metadata and sending it over a computer network. In some instances, these repetitive inputs (e.g., repetitive clicks, selections, or queries) increase storage device I/O (e.g., excess physical read/write head movements on non-volatile disk) because each time a user inputs unnecessary information, such as inputting several queries, the computing system often has to reach out to the storage device to perform a read or write operation, which is time consuming, error prone, and can eventually wear on components, such as a read/write head. Further, if multiple users repetitively issue queries, it is expensive because processing queries consumes a lot of computing resources. For example, for some search engines, a query execution plan may need to be calculated each time a query is issued, which requires a search system to find the least expensive query execution plan to fully execute the query. This decreases throughput and increases network latency, and can waste valuable time.

Aspects of the technology described herein improve the functioning of the computer itself in light of these shortcomings in existing search technologies by providing a solution that enables a search engine to leverage generative AI to identify a list of recommended products to perform tasks described by a maintenance schedule, enabling a user to purchase items to complete a task with a single search query. The maintenance schedule and the list of recommended products corresponding to tasks described by the maintenance schedule are generated from various information utilizing a machine learning model. As can be appreciated, better results are achieved compared to traditional search engines that require multiple search queries from the user.

Aspects of the technology described herein provide a number of improvements over existing search technologies. For instance, computing resource consumption is improved relative to existing technologies. In particular, the search accuracy is enhanced by leveraging generative AI to identify a list of recommended products corresponding to perform tasks described by a maintenance schedule, thereby allowing the user to more quickly access relevant search results. This eliminates (or at least reduces) the repetitive user queries and filter selections because the search results comprise a list of items to complete the task the user is seeking. Accordingly, aspects of the technology described herein decrease computing resource consumption, such as processing power and network bandwidth. For instance, a user query (e.g., an HTTP request), would only need to traverse a computer network once (or fewer times relative to existing technologies).

In like manner, aspects of the technology described herein improve storage device or disk I/O and query execution functionality. As described above, the inadequate search results provided by existing search technologies results in repetitive user queries and filter selections. This causes multiple traversals to disk I/O. In contrast, aspects described herein reduce storage device I/O because the user provides a reduced amount of inputs so the computing system does not have to reach out to the storage device as often to perform a read or write operation. For example, by leveraging generative AI, the search engine can respond with enhanced search results enabling a user to be aware of a maintenance task and purchase items to complete the task with a single search query. Accordingly, there is not as much wear due to query execution functionality.

Having briefly described an overview of aspects of the technology described herein, an exemplary operating environment in which aspects of the technology described herein may be implemented is described below.

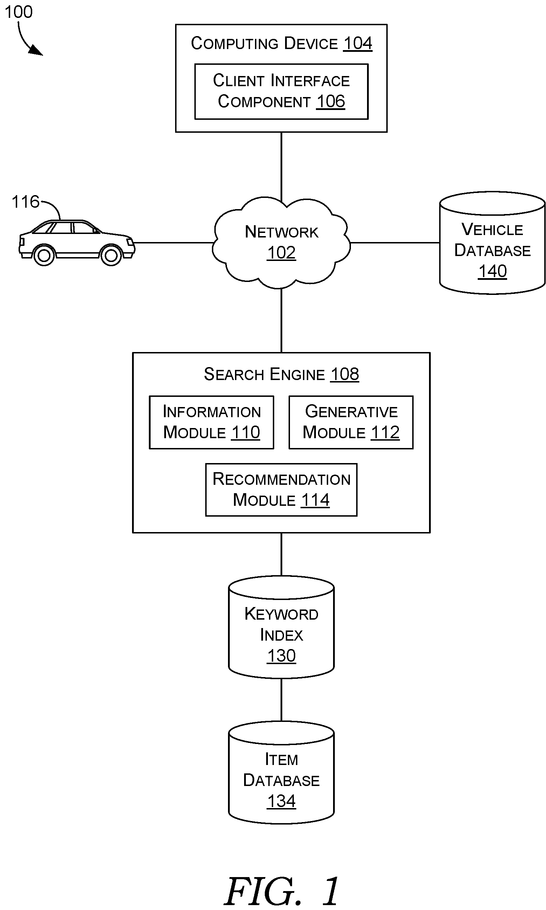

Turning now to FIG. 1, a block diagram is provided showing an operating environment 100 in which aspects of the present disclosure may be employed. It should be understood that this and other arrangements described herein are set forth only as examples. Other arrangements and elements (e.g., machines, interfaces, functions, orders, and groupings of functions) can be used in addition to or instead of those shown, and some elements may be omitted altogether for the sake of clarity. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, some functions may be carried out by a processor executing instructions stored in memory.

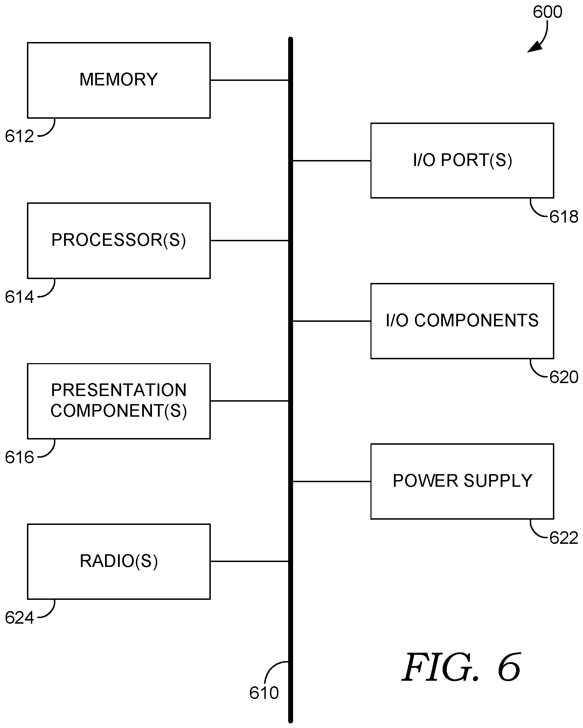

Among other components not shown, example operating environment 100 includes a network 102; a computing device 104 having a client interface component 106; search engine 108 having an information module 110, a generative module 112, and a recommendation module 114; keyword index 130; item database 134; vehicle 116; and vehicle database 140. It should be understood that environment 100 shown in FIG. 1 is an example of one suitable operating environment. Each of the components shown in FIG. 1 may be implemented via any type of computing device, such as computing device 600, described below in connection to FIG. 6, for example.

These components may communicate with each other via the network 102, which may include, without limitation, one or more local area networks (LANs) and/or wide area networks (WANs). In exemplary implementations, the network 102 comprises the Internet and/or a cellular network, amongst any of a variety of possible public and/or private networks. In aspects, the network 102 may include multiple networks, as well as being a network of networks, but is shown in more simple form so as to not obscure other aspects of the present disclosure.

It should be understood that any number of user devices, servers, and data sources may be employed within the operating environment 100 within the scope of the present disclosure. Each may comprise a single device or multiple devices cooperating in a distributed environment. For instance, the search engine 108 may be provided via multiple devices arranged in a distributed environment that collectively provide the functionality described herein. Additionally, other components not shown may also be included within the distributed environment.

The computing device 104 can be a client device on the client-side of the operating environment 100, while the search engine 108 can be on the server-side of operating environment 100. For example, the search engine 108 can comprise server-side software designed to work in conjunction with client-side software on the computing device 104 so as to implement any combination of the features and functionalities discussed in the present disclosure. This division of the operating environment 100 is provided to illustrate one example of a suitable environment, and there is no requirement for each implementation that any combination of the search engine 108 and the computing device 104 remain as separate entities. While the operating environment 100 illustrates a configuration in a networked environment with a separate computing device, search engine, keyword index, item database, vehicle, and vehicle database, it should be understood that other configurations can be employed in which components are combined. For instance, in some configurations, a computing device may also serve as a data source and/or may provide search capabilities.

The computing device 104 may comprise any type of computing device capable of use by a user. For example, in one aspect, the computing device 104 may be the type of computing device 600 described in relation to FIG. 6 herein. By way of example and not limitation, a computing device may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device where search queries may be performed via the client interface component 106 or where notifications can be presented via the client interface component 106. A user may be associated with the computing device 104. The user may communicate with the search engine 108 through one or more computing devices, such as the computing device 104.

At a high level, the search engine 108 receives information corresponding to a vehicle input from the computing device 104 (or another computing device not depicted), from sensors of the vehicle 116 via an application programming interface, and/or from an On-Board Diagnostic II scanner via an application programming interface. In aspects, the information comprises a year, make, model, and/or engine type of a vehicle. The information may also comprise mileage, type of miles driven, climate, or geographical location corresponding to the vehicle. In response to receiving the information, the search engine 108 utilizes a generative AI model to generate a maintenance schedule and a list of recommended products to perform tasks described by the maintenance schedule.

In some configurations, the search engine 108 may be embodied on one or more servers. In other configurations, the search engine 108 may be implemented at least partially or entirely on a user device, such as computing device 600 described in FIG. 6. The search engine 108 (and its components) may be embodied as a set of compiled computer instructions or functions, program modules, computer software services, or an arrangement of processes carried out on one or more computer systems.

As shown in FIG. 1, the search engine 108 includes the information module 110, the generative module 112, and the recommendation module 114. In one aspect, the functions performed by modules of the search engine 108 are associated with one or more applications, services, or routines. In particular, such applications, services, or routines may operate on one or more user devices (such as computing device 104) or servers (e.g., the search engine 108), or may be distributed across one or more user devices and servers. In some aspects, the applications, services, or routines may be implemented in the cloud. Moreover, in some aspects, these modules of the search engine 108 may be distributed across a network, including one or more servers and client devices (such as computing device 104), in the cloud, or may reside on a user device such as computing device 104.

In addition, the modules of the search engine 108 and the functions and services performed by these modules may be implemented at appropriate abstraction layer(s) such as an operating system layer, an application layer, or a hardware layer, etc. Alternatively, or in addition, the functionality of these modules (or the aspects of the technology described herein) can be performed, at least in part, by one or more hardware logic components. For instance, and without limitation, illustrative types of hardware logic components that can be used include Fieldprogrammable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Further, although functionality is described herein with regards to specific modules shown in search engine 108, it is contemplated that in some aspects, functionality of one of the modules can be shared or distributed across other modules.

The information module 110 receives information corresponding to a vehicle 116 of a user. For example, a user may input information at computing device 104 via a client interface component 106 that provides access to a search engine. In another example, the information is received at the search engine from sensors of the vehicle 116 via an application programming interface. In yet another example, the information is received at the search engine from an On-Board Diagnostic II scanner in communication with the vehicle 116 via an application programming interface. As previously mentioned, the information comprises a year, make, model, and/or engine type of a vehicle. In some aspects, the computing device 104 and client interface component may be part of or a component of vehicle 116.

In some aspects, information module 110 may receive additional information. For example, the information may also comprise mileage, type of miles driven, climate, or geographical location corresponding to the vehicle 116. Information module 110 may also receive information corresponding to the user, such as a skill set or a purchase history of the user. Information module 110 may also receive event information corresponding to an upcoming event.

In some aspects, information module 110 receives vehicle information corresponding to user manuals or maintenance guides for various vehicles, such as from vehicle database 140. In other aspects, information module 110 receives part order information. The part order information may include purchase history for non-maintenance parts that have been ordered by automotive repair shops or automotive parts stores. Each of these types of information can be utilized by generative module 112 as described in more detail below.

Additionally, the information module 110 may be configured to communicate with other modules of search engine 108, such as the generative module 112 or the recommendation module 114, for example. The information module 110 may communicate information to the generative module 112. Further, the information module 110 may be configured to transmit the maintenance schedule and/or a list of recommended products to perform tasks described by the maintenance schedule to computing devices, such as computing device 104.

Continuing the example, the information module 110 may cause one or more graphical user interface displays of various computing devices to display the information, the maintenance schedule, and/or a list of recommended products to perform tasks described by the maintenance schedule. In aspects, information module 110 causes the client interface component 106, through which the information may be input (e.g., by a user in a search tool on a web page), to display the information, the maintenance schedule, and/or a list of recommended products to perform tasks described by the maintenance schedule. Further, the information module 110 may comprise an Application Program Interface (API) that allows applications to submit the information (and optionally other information, such as user information, contextual information, and the like) for receipt by the search engine 108.

The generative module 112 utilizes a machine learning model to generate a personalized maintenance schedule corresponding to a vehicle. In some aspects, the generative module 112 identifies or generates a list of recommended products to perform tasks described by the maintenance schedule. The generative module 112 comprises any type of generative AI model that uses neural networks to identify patterns and structures within existing data (e.g., the information) to generate new and original content (e.g., a personalized maintenance schedule and a list of recommended products to perform tasks described by the maintenance schedule). Although described as a single machine learning model, the generative module 112 may be a series of machine learning models working together to generate the personalized maintenance schedule and a list of recommended products to perform tasks described by the maintenance schedule.

The generative module 112 may be trained utilizing an example maintenance schedule template indicating how the generative module 112 should format the output. In this way, the generative module 112 is provided context or structure for the maintenance schedule. The generative module 112 may be trained to identify a minimum number of items (e.g., 30 maintenance items) to include in the maintenance schedule. The generative module 112 may also have access to vehicle information corresponding to user manuals or maintenance guides for various vehicles, such as from vehicle database 140. The generative module 112 may curate the data it needs from these sources to generate the maintenance schedule using the learned structure. Further, the generative module 112 generates a list of recommended products to perform tasks described by the maintenance schedule. For example, each task described by the maintenance schedule can be provided as input to the generative module 112 and the generative module 112 provides as output a list of recommended products needed to perform each task.

In some aspects, the generative module 112 may have access to part order information. The part order information includes purchase history for non-maintenance parts that have been ordered by automotive repair shops or automotive parts stores. The generative module 112 can be trained to curate information from this source to generate a prediction of non-maintenance parts of the vehicle 116 that are likely to fail. In some aspects, the generative AI model can also use part order information corresponding to maintenance parts that have been ordered for other vehicles to predict when maintenance parts are likely to fail that may not correlate to the same timeframe or mileage provided by the user manuals or maintenance guides.

In some aspects, the search engine 108 or the generative module 114 identifies search results in response to search queries processed against item database 134, which is described in more detail below. For example, the search engine 108 or the generative module 114 may query the keyword index 130 to identify results that satisfy criteria of the list of recommended products to perform tasks described by the maintenance schedule. In some aspects, the results identified in the keyword index 130 are mapped to items in the item database 134. For clarity, an item may be an item listing for a product and may include a variety of additional information, such as price, price range, quality, condition, ranking, material, brand, manufacturer, etc. In some aspects, the generative module 114 is trained on a catalog of an electronic marketplace and learns titles, descriptions, and other information associated with available listings and provides a list of recommended products to perform tasks described by the maintenance schedule without utilizing the keyword index 130.

The search engine 108 or the generative module 114 also ranks the search results. In some aspects, information learned from historical search sessions or user feedback is utilized to optimize the ranking of the search results. For example, selections made by other users submitting similar information may be leveraged to increase or decrease the ranking of individual items within the search results.

In some aspects, feedback may be stored in search logs. The search logs may be embodied on a plurality of databases, wherein one or more of the databases comprise one or more hardware components that are part of the search engine 108. In aspects, the search logs are configured for storing information regarding historical search sessions for users, including, for instance, information submitted by a plurality of users via client interface components (e.g., client interface component 106), the list of recommended products to perform tasks described by the maintenance schedule defined by the information, search results associated with the information, the list of recommended products to perform tasks described by the maintenance schedule, or user interactions (e.g., hovers, click-throughs, purchases, etc.) associated with the search results. In some embodiments, the search logs store a timestamp (e.g., day, hour, minute, second, etc.) for each user query, search result, the list of recommended products to perform tasks described by the maintenance schedule, item listing associated with the search result and/or the tasks, user interaction with the search result and/or the list of recommended products to perform tasks described by the maintenance schedule, and so forth.

In addition, the information stored in search logs regarding historical search sessions may include other result selection information, such as subsequent filters selected in response to receiving search results, the list of recommended products to perform tasks described by the maintenance schedule, and item listings. In some embodiments, result selection information may include the time between two successive selections of search results, the language employed by the user, and the country where the user is likely located (e.g., based on a server used to access the search engine 108). In some implementations, other information associated with the historical search sessions that is stored may comprise user interactions with a ranking displayed within an item listing, negative feedback displayed with the item listing or the list of recommended products to perform tasks described by the maintenance schedule, and other information such as whether the user clicked or viewed a document associated with an item listing. User information, including user cookies, cookie age, IP (Internet Protocol) address, user agent of the browser, and so forth, may also be stored in search logs. In some embodiments, the user information is recorded in the search logs for an entire user session or multiple user sessions.

The keyword index 130 and item database 134 may comprise data sources or data systems, which are configured to make data available to any of the various constituents of operating environment 100. The keyword index 130 and item database 134 may be discrete components separate from search engine 108 or may be incorporated or integrated into the search engine 108 or other components the operating environment 100. Among other things, item database 134 can store search results associated with search queries about which information can be indexed in keyword index 130.

The keyword index 130 can take the form of an inverted index, but other forms are possible. The keyword index 130 stores the information about items in a manner that allows the search engine 108 to efficiently identify search results for a search query. The search engine 108 can be configured to run any number of queries on the keyword index 130. The keyword index 130, according to an example embodiment, may include an inverted index storing a mapping from textual search queries to items in item database 134.

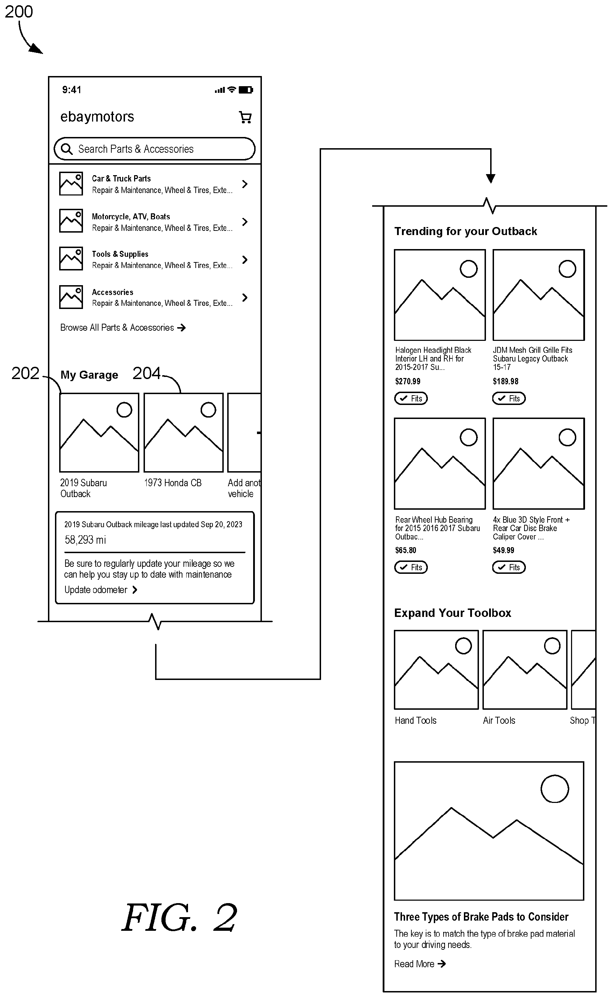

In practice, and turning now to FIGS. 2-4, example user interfaces 200, 300, 400 illustrate various search results. For example, FIG. 2 is an example user interface 200 showing an example search engine. As illustrated, information 202, 204 corresponding to vehicles of the user has been received. In various aspects, the information may have been input by the user via a search engine, received at the search engine from sensors of the vehicle via an application programming interface, or received at the search engine from an On-Board Diagnostic II scanner via an application programming interface. Also as illustrated, the information may include a current or last updated mileage of the vehicle.

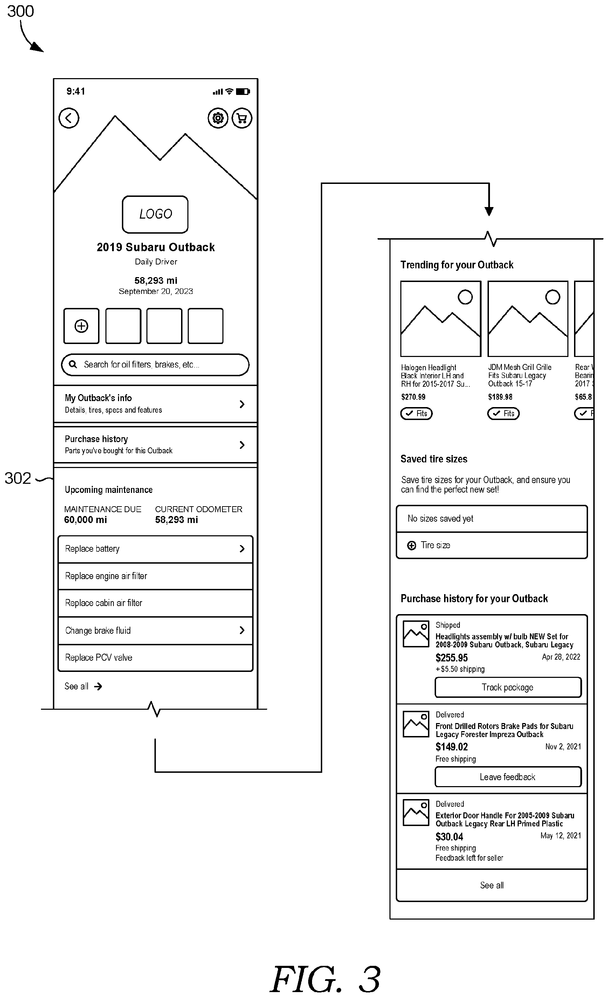

Referring to FIG. 3, an example user interface 300 illustrates a maintenance schedule 302, according to an aspect of the technology described herein. In this example, the user is provided a maintenance schedule 302 for one of his vehicles, a 2019 Subaru Outback. As illustrated, the current odometer of the vehicle reads 58,293 miles and the upcoming maintenance is provided for 60,000 miles. The maintenance schedule 302 is provided by a generative AI model (e.g., the generative module 112 of FIG. 1), which generates the text of the maintenance schedule 302 based on input information regarding the vehicle (such as year, make/model, odometer reading, last maintenance, etc.). As shown in FIG. 3, the maintenance schedule 302 includes recommendation to replace the battery, replace the engine air filter, replace the cabin air filter, change the brake fluid, and replace the PCV valve. By clicking on any of these tasks, the user may be provide a list of recommended products to perform the selected tasks. Moreover, links may be provided enabling the user to purchase the items from an electronic marketplace. In some aspects, information corresponding to the particular vehicle, purchase history of the user for the particular vehicle, and items trending for the particular vehicle may also be selected and viewed.

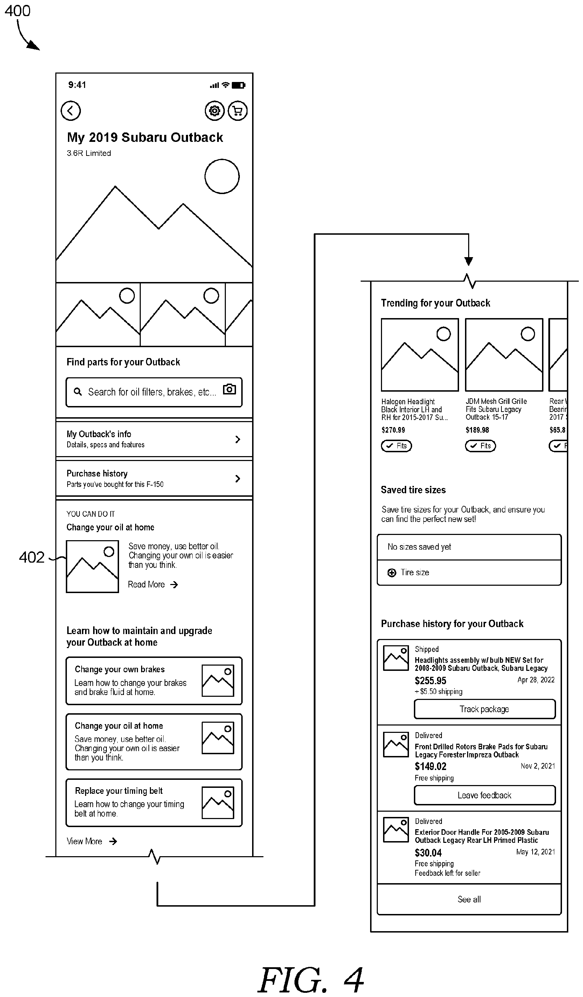

In another example, and referring now to FIG. 4, an example user interface 400 illustrates an example of instructions for performing a task. As illustrated, the user may have selected the task of changing oil. In addition to providing links enabling the user to purchase the items from an electronic marketplace corresponding to the task, the user is also provided a link to instructions 402 describing how to perform the task. Additionally, other tasks the user may be able to perform may also include links to instructions describing how to perform the other tasks.

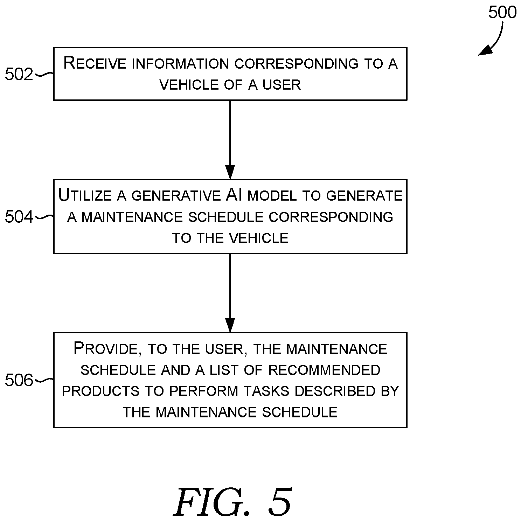

FIG. 5 is a flow diagram showing a method 500 for leveraging for leveraging generative AI to identify a list of recommended products corresponding to tasks described by a maintenance schedule, in accordance with an aspect of the technology described herein. The method 500 may be performed, for instance, by the search engine 108 of FIG. 1.

As shown at block 502, information corresponding to a vehicle of a user is initially received. For example, the information may be received at a search engine (search engine 108 of FIG. 1) from computing device (such as computing device 104 of FIG. 1) via a client interface component (such as client interface component 106 of FIG. 1). In another example, the information may be received at the search engine from a computing device or sensors of a vehicle (such as vehicle 116 of FIG. 1) via an application programming interface. In yet another example, the information may be received at the search engine from an On-Board Diagnostic II scanner via an application programming interface. In some aspects, the user may be prompted to provide periodic updates (e.g., mileage, type of miles driven (e.g., highway vs. residential/city), climate, geography).

At block 504, a generative AI model is utilized to generate a maintenance schedule corresponding to the vehicle. The maintenance schedule may describe a series of tasks to perform on the vehicle at various stages in the life of the vehicle. For example, the maintenance schedule may recommend changing the oil every 5,000 miles, replacing brake fluid every 30,000 miles, flushing the transmission fluid every 60,000 miles and the like. To do so, the generative AI model may have access to data corresponding to manufacturer best practices for a variety of vehicle years, makes, models, and engine types. For example, the generative AI model may have access to a variety of vehicle owner's manuals and maintenance guides. In this way, the generative AI model personalizes the maintenance schedule to the vehicle.

Additionally or alternatively, the generative AI model may have access to information corresponding to the vehicle that may influence how the generative AI model generates the maintenance schedule. For example, the generative AI model may recommend more frequent oil changes based on the climate or geographical location corresponding to the vehicle. In another example, the generative AI model may wait to recommend changing windshield wiper blades in a hot climate until the weather cools and the replacement windshield wiper blades are less likely to be damaged by extreme heat. In this way, the generative AI model personalizes the maintenance schedule to external factors that may affect the life of the replacement parts.

In some aspects, the generative AI model is utilized to generate a list of recommended products to perform tasks described by the maintenance schedule. For example, utilizing tasks in the maintenance schedule, the generative AI model may generate a list of products needed to perform the tasks. Continuing the oil change example, the generative AI model may generate a list of products that includes items to perform the task of changing the oil (e.g., oil, an oil filter, a funnel, wheel ramps, various tools, an oil pan, etc.).

In some aspects, the maintenance schedule or the list of recommended products provided to the user may be modified based on a skill set or a purchase history of the user. For example, a set of questions or a game may be designed to establish the skill set of the user so appropriate tasks and products can be recommended to the user. In another example, purchase history may be used to provide "badges" to the user that allow the user to graduate to tasks with higher degrees of difficulty. For example, after the user has purchased items to change the oil, the user may be provided a "badge" that causes the maintenance schedule or the list of recommended products to be modified to include more difficult tasks. In another example, rather than relying on purchase history, the user may self-report tasks the user has previously performed to earn the "badges."

Additionally or alternatively, the maintenance schedule or the list of recommended products provided to the user may be modified based on updates provided by the user or event information corresponding to an upcoming event. For example, event information such as from an electronic calendar, email messages, text messages, purchase history, and the like may reveal that the user is going on vacation in the next month. The maintenance schedule or the list of recommended products may be modified to include tasks such as rotating the tires on the vehicle, checking fluid levels, and the like.

In another example, the event information may indicate the user is moving or going to college. In this example, the maintenance schedule or the list of recommended products may be modified to include tasks corresponding to a different climate where the vehicle may be driven or proactive tasks such as replacing a battery, flushing the coolant, or changing the spark plugs. In the same example, the maintenance schedule or the list of recommended products may be modified to include tasks less frequently or more frequently depending on the circumstances of the event. For example, if the user is moving to an area where the vehicle will be driven more on highways than residential streets, less frequent brake pad changes may be recommended. Or, if the user is moving to college, all or a portion of the maintenance schedule or the list of recommended products may be modified to include tasks less frequently because the vehicle will be driven less frequently.

In another example, the maintenance schedule or the list of recommended products provided to the user may be modified based on where the vehicle is typically parked. For example, if the vehicle is normally parked in a garage, it may be less susceptible to impacts of the climate. Or, since the vehicle is parked in a garage, the user may be able to perform more maintenance tasks than if the vehicle were parked on the street. For example, if the vehicle is parked on the street, it may be difficult to perform tasks such as changing fluids and the maintenance schedule or the list of recommended products provided to the user may be modified to not include those items or suggest they be performed by a professional and not include the list of recommended products. In this case, rather than a list of recommended products, a list of nearby professionals may be included. The list may enable the user to link to a website of the nearby professionals, call a selected professional, or schedule an appointment.

At block 506, the maintenance schedule and the list of recommended products is provided to the user. In some aspects, the user may select a task from the maintenance schedule and the list of recommended products is revealed to the user (such as by modifying the user interface or showing the list in a second user interface). Moreover, the user may be enabled to purchase products from the list of recommended products in an electronic marketplace by selecting a product or group of products from the list. In some aspects, a description of the tasks described by the maintenance schedule, a level of difficulty to perform the tasks, or instructions to perform the tasks are also provided to the user to help the user determine whether the user has the skills or time to perform the task.

Additionally or alternatively, part order information corresponding to non-maintenance parts that have been ordered for other vehicles may be utilized by the generative AI model to predict non-maintenance parts of the vehicle that are likely to fail. Non-maintenance parts may include items such as the transmission or the engine. For example, purchase history for non-maintenance parts that have been ordered by automotive repair shops or automotive parts stores may be utilized to reveal parts on various vehicles that have been previously replaced. utilizing this information, the generative AI model can predict non-maintenance parts of the vehicle that are likely to fail. Such information can be useful to someone thinking about purchase a vehicle or someone that has just purchased a vehicle to better inform their purchase decision or help budget for future repairs.

In some aspects, the generative AI model can also use part order information corresponding to maintenance parts that have been ordered for other vehicles to predict when maintenance parts are likely to fail. For example, the generative AI model can include in the maintenance schedule the manufacturer best practices, such as changing the timing belt every 100,000 miles but also include a prediction of when the timing belt is most likely to fail based on an actual history of orders by automotive repair shops or automotive parts stores for the specific year, make, model, and engine type of the vehicle.

With reference to FIG. 6, computing device 600 includes a bus 610 that directly or indirectly couples the following devices: memory 612, one or more processors 614, one or more presentation components 616, one or more input/output (I/O) ports 618, one or more I/O components 620, and an illustrative power supply 622. Bus 610 represents what may be one or more busses (such as an address bus, data bus, or combination thereof). Although the various blocks of FIG. 6 are shown with lines for the sake of clarity, in reality, these blocks represent logical, not necessarily actual, components. For example, one may consider a presentation component such as a display device to be an I/O component. Also, processors have memory. The inventors hereof recognize that such is the nature of the art and reiterate that the diagram of FIG. 6 is merely illustrative of an exemplary computing device that can be used in connection with one or more aspects of the present technology. Distinction is not made between such categories as "workstation," "server," "laptop," "handheld device," etc., as all are contemplated within the scope of FIG. 6 and with reference to "computing device."

Computing device 600 typically includes a variety of computer-readable media. Computer-readable media can be any available media that can be accessed by computing device 600 and includes both volatile and nonvolatile media, removable and non-removable media. By way of example, and not limitation, computer-readable media may comprise computer-storage media and communication media.

Computer-storage media includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVDs) or other optical disk storage, magnetic cassettes, magnetic tape, magnetic disk storage or other magnetic storage devices, or any other medium which can be used to store the desired information and which can be accessed by computing device 600. Computer storage media does not comprise signals per se.

Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 612 includes computer storage media in the form of volatile and/or nonvolatile memory. The memory may be removable, non-removable, or a combination thereof. Exemplary hardware devices include solid-state memory, hard drives, optical-disc drives, etc. Computing device 600 includes one or more processors 614 that read data from various entities such as memory 612 or I/O components 620. Presentation component(s) 616 presents data indications to a user or other device. Exemplary presentation components include a display device, speaker, printing component, vibrating component, and the like.

The I/O ports 618 allow computing device 600 to be logically coupled to other devices, including I/O components 620, some of which may be built in. Illustrative components include a microphone, joystick, game pad, satellite dish, scanner, printer, wireless device, etc.

The I/O components 620 may provide a natural user interface (NUI) that processes air gestures, voice, or other physiological inputs generated by a user. In some instances, inputs may be transmitted to an appropriate network element for further processing. An NUI may implement any combination of speech recognition, touch and stylus recognition, facial recognition, biometric recognition, gesture recognition both on screen and adjacent to the screen, air gestures, head and eye tracking, and touch recognition associated with displays on the computing device 600. The computing device 600 may be equipped with depth cameras, such as stereoscopic camera systems, infrared camera systems, RGB camera systems, and combinations of these, for gesture detection and recognition. Additionally, the computing device 600 may be equipped with accelerometers or gyroscopes that enable detection of motion. The output of the accelerometers or gyroscopes may be provided to the display of the computing device 600 to render immersive augmented reality or virtual reality.

Some aspects of computing device 600 may include one or more radio(s) 624 (or similar wireless communication components). The radio 624 transmits and receives radio or wireless communications. The computing device 600 may be a wireless terminal adapted to receive communications and media over various wireless networks. Computing device 600 may communicate via wireless protocols, such as code division multiple access ("CDMA"), global system for mobiles ("GSM"), or time division multiple access ("TDMA"), as well as others, to communicate with other devices. The radio communications may be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection may include, by way of example and not limitation, a Wi-Fi^{®} connection to a device (e.g., mobile hotspot) that provides access to a wireless communications network, such as a WLAN connection using the 802.11 protocol; a Bluetooth connection to another computing device is a second example of a short-range connection, or a near-field communication connection. A long-range connection may include a connection using, by way of example and not limitation, one or more of CDMA, GPRS, GSM, TDMA, and 802.16 protocols.

## Claims

1. A method of leveraging generative artificial intelligence (AI) to generate a maintenance schedule for a vehicle and identify a list of recommended products to perform tasks described by the maintenance schedule, the method comprising:
receiving information corresponding to a vehicle of a user;
based on the information, utilizing a generative AI model to generate a maintenance schedule corresponding to the vehicle; and
providing, to the user, the maintenance schedule and a list of recommended products to perform tasks described by the maintenance schedule.

2. The method of claim 1, further comprising, based on the maintenance schedule, utilizing the generative AI model to generate the list of recommended products.

3. The method of claim 1 or 2, wherein the information is input by the user via a search engine and communicated to the generative AI model.

4. The method of any one of the preceding claims, wherein the information is received at the search engine from sensors of the vehicle via an application programming interface and communicated to the generative AI model; and/or
wherein the information is received at the search engine from an On-Board Diagnostic II scanner via an application programming interface and communicated to the generative AI model.

5. The method of any one of the preceding claims, further comprising providing a description of the tasks described by the maintenance schedule, a level of difficulty to perform the tasks, or instructions to perform the tasks, wherein, optionally, the list of recommended products includes items to perform the tasks.

6. The method of any one of the preceding claims, further comprising receiving a skill set or a purchase history of the user.

7. The method of any one of the preceding claims, further comprising, based on the skill set or the purchase history of the user, modifying the maintenance schedule or the list of recommended products provided to the user.

8. The method of any one of the preceding claims, wherein the information comprises miles driven, type of miles driven, climate, or geographical location corresponding to the vehicle.

9. The method of any one of the preceding claims, further comprising receiving event information corresponding to an upcoming event, and
optionally further comprising, based on the upcoming event, modifying the maintenance schedule or the list of recommended products provided to the user.

10. The method of any one of the preceding claims, further comprising receiving part order information corresponding to non-maintenance parts that have been ordered for other vehicles, and
optionally further comprising utilizing the part order information to predict non-maintenance parts of the vehicle that are likely to fail.

11. One or more transitory or non-transitory computer storage media storing computer-readable instructions that when executed by a processor, cause the processor to perform operations, the operations comprising:
receiving information corresponding to a vehicle of a user;
based on the information, utilizing a generative AI model to generate a maintenance schedule corresponding to the vehicle;
based on the maintenance schedule, utilizing the generative AI model to generate a list of recommended products to perform tasks described by the maintenance schedule; and
providing the maintenance schedule to the user and enabling the user to purchase items from the list of recommended products via an electronic marketplace.

12. The one or more transitory or non-transitory computer storage media of claim 11, wherein the information is: input by the user via a search engine and communicated to a generative AI model, received at the search engine from sensors of the vehicle via an application programming interface and communicated to the generative AI model, or received at the search engine from an On-Board Diagnostic II scanner via an application programming interface and communicated to the generative AI model.

13. The one or more transitory or non-transitory computer storage media of claim 11 or 12, further comprising, based on a skill set or a purchase history of the user, modifying the maintenance schedule or the list of recommended products provided to the user, and
optionally further comprising, based on event information corresponding to an upcoming event, modifying the maintenance schedule or the list of recommended products provided to the user.

14. The one or more transitory or non-transitory computer storage media of any one of claims 11 to 13, further comprising utilizing part order information corresponding to non-maintenance parts that have been ordered for other vehicles to predict non-maintenance parts of the vehicle that are likely to fail.

15. A system for leveraging generative artificial intelligence (AI) to generate a maintenance schedule for a vehicle and identify a list of recommended products to perform tasks described by the maintenance schedule, the system comprising:
at least one processor; and
one or more computer storage media storing computer-readable instructions that when executed by the at least one processor, cause the at least one processor to perform operations comprising:
receiving information corresponding to a vehicle of a user;
based on the information, utilizing a generative AI model to generate a maintenance schedule corresponding to the vehicle;
based on the maintenance schedule, utilizing the generative AI model to generate a list of recommended products to perform tasks described by the maintenance schedule; and
providing the maintenance schedule to the user and enabling the user to purchase items from the list of recommended products via an electronic marketplace.
